# EUROPEAN PATENT APPLICATION

(11) **EP 2 182 481 A1**
(43) Date of publication of application: **05.05.2010**
(21) Application number: 09155637.3
(22) Date of filing: 19.03.2009
(51) Int. Cl.: G06Q 40/00

(54) **Method of systematic risk management and system and computer program product thereof**

(30) Priority: 31.10.2008 TW 97142284
(71) Applicant: G5 Capital Management Ltd., Taipei City 106 (TW)
(72) Inventor: Jeng, Jen-Her, Taipei City 106 (TW); Wang, Keh-Luh, Taipei City 106 (TW); Niu, Wei-Fang, Taipei City 106 (TW); Wang, Nan-Jye, Taipei City 106 (TW); Lin, Shih-Shan, Taipei City 106 (TW)
(74) Representative: Epping - Hermann - Fischer

(57) **Abstract**

The present invention discloses a systematic risk management method, and its system and computer program product. The method includes the steps of setting a correspondence relation between a value at risk and a leverage ratio common to the global market by a risk management unit, selecting a plurality of subject financial instruments by an interface unit, obtaining data of the selected subject financial instruments from a storage unit by the risk management unit, calculating the value at risk of each subject financial instrument by the risk management unit, selectively adjusting the leverage ratio of each subject financial instrument according to the correspondence relation, and adding the subject financial instruments into an asset pool and outputting the asset pool from the interface unit.

## Description

### BACKGROUND OF THE INVENTION

### Field of the Invention

This present invention relates to a systematic risk management method and the system and the computer program product thereof, and more particularly to a systematic risk management method and the system and the computer program product thereof applied in an investment adopting a combination of financial instruments.

### Description of the Related Art

Since 1988, the Basel Committee on Banking Supervision started proposing Risk and Capital Management, and at the same time, both a Standard Approach and an Internal Model Approach for Market Risk Measurement are proposed in 1996. The Committee further proposed New Basel Accord (also known as Basel II) in 2001, and the Basel II primarily compiled most appropriate practices of the internal management of major international banks into risk management guidelines for all banks over the world. These guidelines came from long-term internal risk management policies and management methods of major international financial organizations, and finally, the Basel Committee established the regulations. Based on the risk assets derived from the businesses or trades of the banks, the Basel Committee proposed a request for a capital with a percentage corresponding to the risk assets to secure the risk to banks, and thus banks have to calculate the value at risk of these assets and possible losses incurred. The Committee did not request banks to use a particular method for the calculation of risks, but a minimum requirement for the calculation must be met to achieve a consistent, continuous, stable and correct calculation result. Since the calculation of the value at risk is generally adopted by international financial organizations, therefore future commodities and funds require a mechanism for calculating the value at risk according to international common practice, in addition to the calculation of daily profits or losses. The function of the value at risk not only can help fund managers understand the risks borne by the funds and the possible losses of future funds, but also the possible losses occurred in a special condition or an extreme condition if results of a stress test are used.

In 1991, the American Managed Funds Association (MFA) was established, and the MFA includes members of hedge funds, funds of funds and commodity management funds. It provides the industry with the establishment of related fund management policies and the most appropriate common practices. Its members are major absolute return fund managers who manage assets over USD1.75 trillion, but most of these assets are private funds without a strict standard. To provide a risk management basis for the private funds having no strict standards, the MFA proposed the most appropriate common practice for hedge funds in 2005, and such hedge funds have been accepted extensively by international private fund management companies.

In 2004, Undertakings for Collective Investment in Transferable Securities proposed by the European Union (UCITS III) include a less frequently used non-sophisticated fund and a simpler derivative such as the commodity and options traded in the Stock Exchange, and such financial instruments adopt a Commitment approach for the risk management.

The so-called Commitment approach is a general overall risk exposure management mechanism (UCITS III Non-Sophisticated Global Risk Exposure over Total NAV, GRE). With reference to Table 1, if the total net asset value (TNAV) of the fund is equal to $1,000,000,000, then the value of the total risk exposure of its derivatives permitted by the UCITS III must not exceed 100% of the fund's TNAV. In other words, the risk exposure fields in Table 1 are set to 1.00. If the fund is operated with commodities, the total sum of contract values (wherein the hedge of bullish and bearish market trends) of all commodities, regardless of their deposit, of Taiwan index futures, financial futures, electronics futures, American 10-year bonds and Gold 100 oz in Table 1 does not exceed the TNAV of the funds of funds, and thus the usage efficiency of the funds is very low.

The Available Percentage of Total NAV on Margin & Premium (M&P) adopted by Commodity Trust Fund management is the most frequently used method for managing the risk of derivatives. The principle of M&P is to set an upper limit of the total sum of payables and receivables of the deposit for the derivatives of the fund. With reference to Table 2, the upper limits for the deposit and the premium are 70% of the TNAV of the fund, wherein the M&P fields are 70%. The Available Percentage of Total NAV on Margin & Premium (M&P) only limits the total amount of deposit or premium of derivatives traded in an investment portfolio of derivatives without considering the characteristics of the leverage ratio of the derivatives. For the Taiwan index futures as shown in Table 2, a fund applies 70% of the TNAV for the deposit of the Taiwan index futures and other system associated commodities (such as financial futures and electronics futures), such that the overall leverage ratio is 14.85 times of the fund. If the Taiwan index rises by 1% in that particular day, then the NAV of the fund rises by approximately 15%, and if the Taiwan index closes at an uptick or downtick price (7%), then the NAV of the fund could be increased by several times or lost entirely.

In 2004, the UCITS proposal of the European Union specifically pointed out that the method of appropriately managing the sophisticated fund is to apply a stress test to the value at risk management mechanism (VaR Approach). With the consideration of the nature of commodities, trusts, and funds, it is more appropriate to use the value at risk management mechanism as the main risk management mechanism, and the first prerequisite of such mechanism is to calculate the overall value at risk of the investment portfolio. However, it is generally difficult to estimate the value at risk of the investment portfolio overall.

What is systematic risk? The so-called "systematic risk" covers market risk, credit risk and liquidity risk, which continuously evolves and dynamically stimulates with each other, and the range of its effect covers the whole currency market, financial system and even the global economic system. The systematic risk cannot be hedged easily with a diversified investment, and each type of risks will trigger the whole if any one is affected during the evolution process, and thus it cannot be considered as an independent event. Therefore, traditional risk management mechanisms can no longer take all aspects into consideration nor maximize the risk management function under the impacts of the Century's financial turmoil.

Using the U.S. subprime mortgage crisis which triggered a global financial turmoil in 2008 as an example, when there is a severe fluctuation in the overall economic environment (such as the Federal Reserve Board substantially adjusts the short-term rate of its Federal Reserves), the American mortgage default rate climbs up drastically and results in unbalanced prices in the mortgage market Since the real estate bubble drags the banks into asset impairments and credit decreases (credit risk), the bubble of derivative financial instruments will crack to push the entire global economic system into a liquidity trap (liquidity risk). The cyclical prosperity produced by the liquidity risk expansion while the economy and supply of capitals in the capital market shrink, another cycle of bad systematic risks will explode.

Strictly speaking, a risk is simply one occurring in the evolution process and unable to be simulated or predicted by a normal linear model, and thus it is also known as the "systematic risk".

The global capital creates a complicated and sophisticated capital network through five main markets (including stock market, bond market, foreign exchange market, resource and material market and real estate market), and five major risk factors (including psychological factors, economic factors, strategic factors, region and political factors, and natural environment factors) which are closely related to various different systematic risks. In summation of the traditional risk management structure, the Basel Accord classifies risks into market risks, credit risks and operation risks, but such an over-simplified classification may ignore the correlation among different risks and make it difficult to trace and analyze the change and structure of the systematic risk accurately, not mentioning how to prevent the systematic risk.

Therefore, finding systems and methods for the systematic risk management that covers the M&P, GRE and VaR methods; and searching for a flexible instrument to fit the changing financial world to protect the security of the financial industry and encourage the progress of the financial industry demand immediate attentions, and thus such systems and methods can serve as a core for the risk management of commodities, trusts and funds.

**Table 1. Examples of Total Risk Exposure Management Mechanism**

| Financial Instrument | Value Per Lot | Contract value | Fund TNAV (NTD) | Deposit | Quantity of Lots | Risk Exposure | Subject 1-Day 99% VaR | Asset Pool 1-Day 99% VaR | M&P Percentage (%) |
|---|---|---|---|---|---|---|---|---|---|
| Taiwan Index Futures | $200 | $1,909,000 | $1,000,000,000 | $90,000 | 523 | 1.00 | 4.74% | 4.73% | 4.71 |
| Financial Futures | $1,000 | $1,177,000 | $1,000,000,000 | $75,000 | 849 | 1.00 | 4.91% | 4.90% | 6.37 |
| Electronics Futures | $4,000 | $1,604,000 | $1,000,000,000 | $90,000 | 623 | 1.00 | 5.44% | 5.44% | 5.61 |
| American 10-year Bond | $32,78 0 | $3,482,363 | $1,000,000,000 | $30,977 | 287 | 1.00 | 1.16% | 1.16% | 0.89 |
| Gold 100 oz | $3,278 | $2,244,447 | $1,000,000,000 | $88,506 | 445 | 1.00 | 3.53% | 3.52% | 3.94 |

**Table 2. Examples of Available Percentage of Total NAV on Margin & Premium (M&P)**

| Financial Instrument | Value per Lot | Contract Value | Fund TNAV (NTD) | Deposit | Quantity of Lots | Leverage Ratio | Subject 1-Day 99% VaR | Asset Pool 1-Day 99% VaR | M&P Percentage % |
|---|---|---|---|---|---|---|---|---|---|
| Taiwan Index Futures | $200 | $1,909,000 | $1,000,000,000 | $90,000 | 7777 | 14.85 | 4.74% | 70.40% | 70.0 |
| Financial Futures | $1,000 | $1,177,000 | $1,000,000,000 | $75,000 | 9333 | 10.98 | 4.91% | 53.91% | 70.0 |
| Electronics Futures | $4,000 | $1,604,000 | $1,000,000,000 | $90,000 | 7777 | 12.47 | 5.44% | 67.89% | 70.0 |
| American 10-year Bond | $32,780 | $3,482,363 | $1,000,000,000 | $30,977 | 22597 | 78.69 | 1.16% | 91.31% | 70.0 |
| Gold 100 oz Futures | $3,278 | $2,244,447 | $1,000,000,000 | $88,506 | 7909 | 17.75 | 3.53% | 62.64% | 70.0 |

### Summary of the Invention

The primary objective of the present invention is to overcome the shortcomings of the prior art by providing a systematic risk management system comprising: a storage unit, for storing a plurality of subject financial instrument data; an interface unit, comprising: a financial instrument selection module, for selecting a plurality of subject financial instruments; as well as an asset pool output module, for outputting an asset pool; and a risk management unit, connected to the storage unit and the interface unit, for setting a correspondence relation between a value at risk and a leverage ratio.This correspondence relation could be based on the consensus of the global market or some other risk measurement methods. and at the same time, calculate an individual value at risk for each of the plurality of subject financial instruments, adjust a leverage ratio of each of the plurality of selected subject financial instruments, and finally, add each of the plurality of selected subject financial instruments into the asset pool, and outputting the asset pool from the asset pool output module. It should be noted that the "value at risk" described herein stands for the calculated or estimated risk of loss on a specific portfolio of financial assets, and is not limited to the known Value-at-Risk (VaR) method. To the contrary, any methods or mechanisms capable of calculating or estimating the risk of loss on the financial assets may be applied in the present invention.

Another objective of the present invention is to provide a systematic risk management method comprising the steps of: setting a correspondence relation between a value at risk and a leverage ratio by a risk management unit; selecting a plurality of subject financial instruments by an interface unit; obtaining data of the plurality of selected subject financial instruments from a storage unit by the risk management unit; calculating an individual value at risk for each of the plurality of sub ject financial instruments by the risk management unit, and selectively adjusting a leverage ratio for each of the plurality of subject financial instruments according to the correspondence relation; and adding the plurality of subject financial instruments into an asset pool, and outputting the asset pool through the interface unit.

A further objective of the present invention is to provide a systematic risk management computer program product, such that after the computer program is loaded in a computer and then executed, the systematic risk management method of the invention can be implemented.

### BRIEF DESCRIPTION OF THE DRAWINGS

FIG. 1 shows a block diagram of a systematic risk management system in accordance with a first preferred embodiment of the present invention;
FIG. 2 shows a flow chart of a systematic risk management method in accordance with a first preferred embodiment of the present invention;
FIG. 3 shows a flow chart of a systematic risk management method in accordance with a second preferred embodiment of the present invention;
FIG. 4 shows a flow chart of a systematic risk management method in accordance with a third preferred embodiment of the present invention;
FIG. 5 shows a flow chart of a systematic risk management method in accordance with a fourth preferred embodiment of the present invention;
FIG. 6 shows a flow chart of a stress test of a systematic risk management method in accordance with the present invention;
FIG. 7 shows a correspondence relation between a value at risk and a leverage ratio based on the market consensus in accordance with a first preferred embodiment of the present invention; and
FIG. 8 shows a correspondence relation between a value at risk and a leverage ratio based on the market consensus in accordance with a second preferred embodiment of the present invention.

### DETAILED DESCRIPTION OF THE PREFERRED EMBODIMENTS

Preferred embodiments accompanied with related drawings are used for describing the present invention as follows.

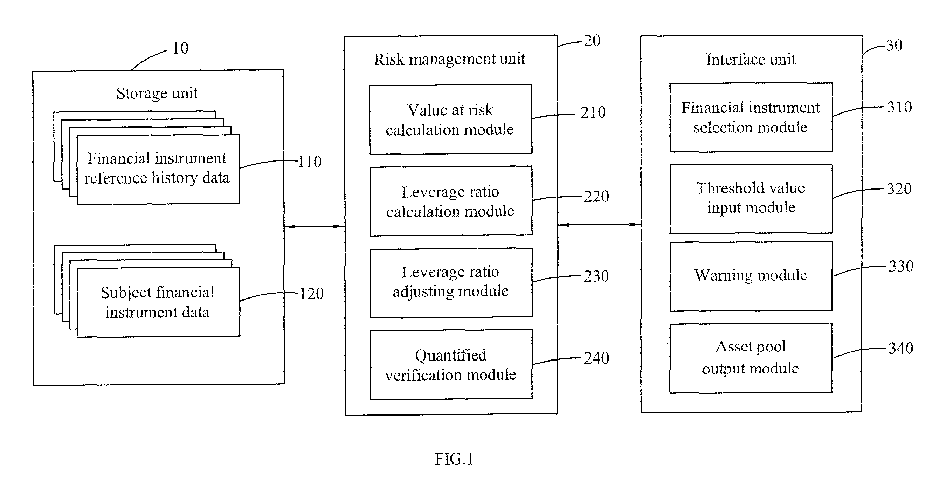

With reference to FIG. 1 for a block diagram of a systematic risk management system in accordance with a preferred embodiment of the present invention, the systematic risk management system comprises a storage unit 10, a risk management unit 20 and an interface unit 30. The storage unit 10 is provided for storing a plurality of records of subject financial instrument data 120. The so-called subject financial instrument data 120 refers to an investment target selected for the investment portfolio, and the financial instruments could be stocks, bonds, currencies, commodities or other derivatives.

The interface unit 30 is used for connecting the systematic risk management system of the invention with an external interface, and the so-called external interface refers to a general definition of the interface, such as a user operating interface or a data interface connected to an external computer system or program. In a preferred embodiment of the present invention, the interface unit 30 comprises a subject financial instrument selection module 310 and an asset pool output module 340. The subject financial instrument selection module 310, for example, provides users with a selection interface for selecting a subject financial instrument 120 from the storage unit 10 as a part of the asset pool, or could be a part for receiving a request command or a packet from the external computer system or program, so as to pick out a desired subject financial instrument 120 as a part of the asset pool. The asset pool mentioned here refers to an investment portfolio. The asset pool output module 340 is provided for outputting the financial instrument and its related data included in the asset pool to the outside, such as displaying the data on a computer screen for the view of users. Therefore, the users can make adjustments to the investment portfolio or output the asset pool to the external computer system or program, such as outputting to a trading system, so that the trading system can perform a trading of the financial instrument and provide a reference of adjusting an investment portfolio when a financial instrument is used for an investment operation.

The risk management unit 20 is coupled to the storage unit 10 and the interface unit 30, for setting a correspondence relation between value at risk and leverage ratio. This correspondence relation can be determined by the global market consensus or other risk measurement methods, and then the risk of the plurality of selected subject financial instruments 120 selected from the asset pool can be managed. In a preferred embodiment of the present invention, the risk management unit 20 comprises a value at risk calculation module 210, a leverage ratio calculation module 220, and a leverage ratio adjusting module 230.

The value at risk calculation module 210 is provided for calculating the value at risk of the financial instrument. More specifically, each selected subject financial instrument has an individual value at risk that can be calculated by a value at risk calculation module 210. The measurement of the value at risk applies statistical techniques to assess the probability of risks, and calculates the worst expected loss of a specific target within a certain confidence level. The measurement of value at risk is one of the risk measurements and is also a calculation of risk measurement required by the Basel II and the UCITS III.

Basically, the calculation of the value at risk is divided into four parts: determining a time horizon for the desired estimation of an expected loss, selecting a confidence level, assuming the probability distribution of a possible return of an investment target or an investment portfolio, and obtaining the value at risk. For the trading of commodities, trusts and funds, the daily value at risk is a more meaningful reference index, and thus the time horizon of the expected loss is set to one day (1-day). As to the confidence level, if the actual loss of 99 out of 100 calculations is smaller than the estimated worst expected loss, then the confidence level is equal to 99%. As to the trading of commodities, trusts, and funds, a confidence level of 99% is set. As to different assumptions, different methods are used for calculating the value at risk, and there are many methods for calculating the value at risk. Three of the methods are used for the illustration as follows: 1. Historical Simulation Method primarily assumes that a historic return mode would recur in the future; 2. Variance-Covariance Method assumes that the return distribution of an investment target or an investment portfolio is a normal distribution and the covariance matrix is calculated among the investment portfolios to obtain the diversification effect of the investment portfolio; and 3. Monte Carlo Simulation Method finds different paths of each subject price in the future investment portfolio by a simulation method with the assumption of a certain return distribution for calculating the value at risk. Finally, the determined confidence level is used for finding a critical value of the return distribution of the investment target or the investment portfolio, and this critical value is the value at risk. For example, 1-Day 99% VaR=0.015 means that there is a 99% chance to have a loss not exceeding 1.5% in a single day. In other words, there is a 1% chance to have a loss exceeding 1.5% in a single day. For 1-Day 99% VaR=100%, it means that there is a 1% chance to have a loss of 100% (which is called an over-loss) in a single day.

The leverage ratio calculation module 220 is provided for calculating the leverage ratio of a financial instrument. More specifically, the leverage ratio of each selected subject financial instrument can be calculated by the leverage ratio calculation module 220. The so-called leverage ratio refers to a risk exposure, but the risk exposure is expressed in terms of dollar amount or percentage, and the leverage ratio is expressed in terms of multiples. In other words, the leverage ratio is equal to the total dollar amount of a risk exposure divided by the Total Net Asset Value (TNAV).

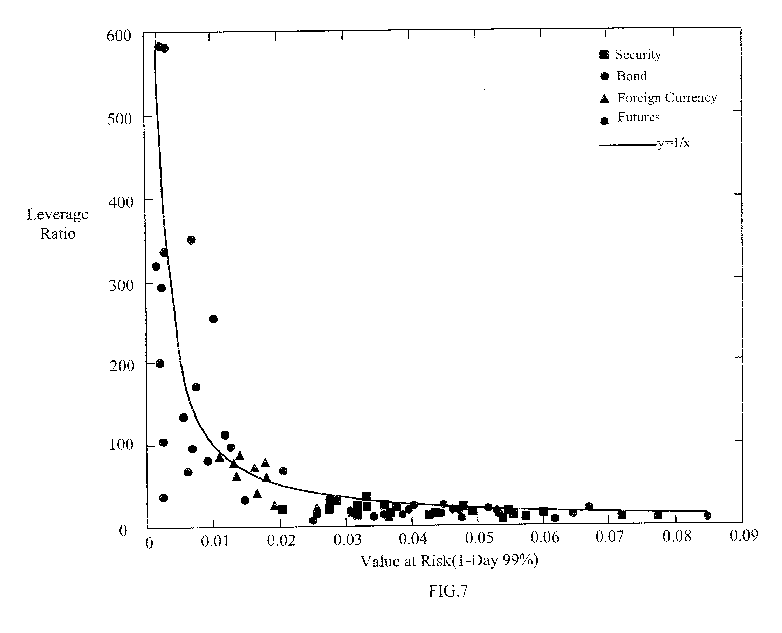

The leverage ratio adjusting module 230 is provided for selectively adjusting the leverage ratio of each of the selected subject financial instruments according to the correspondence relation of the value at risk and the leverage ratio set by the risk management unit 20. With reference to FIG. 7 for a correspondence relation between a value at risk and a leverage ratio based on the global market's consensus in accordance with a first preferred embodiment of the present invention, the x-axis represents the value at risk, and the Y-axis represents the leverage ratio. This correspondence relation between the value at risk and the leverage ratio is a trade-off relation, and the correspondence relation can be represented by the curve. In this preferred embodiment, the correspondence relation between the value at risk and the leverage ratio under the market consensus satisfies the condition of: y=1/x, or leverage ratio = 1/value at risk. According to this correspondence relation, if a selected financial instrument is situated at a position above the curve, it means that the leverage ratio of the value at risk exceeds the leverage ratio of the market consensus, and the risk exposure of such financial instrument is too high. Now, the leverage ratio adjusting module 230 can adjust and lower the leverage ratio of the financial instrument to reduce its risk exposure, so as to achieve the risk management effect. On the other hand, if a selected financial instrument is situated below the curve, it means that the leverage ratio of the value at risk is smaller than the leverage ratio of the market consensus. Now, the leverage ratio adjusting module 230 can adjust and increase the leverage ratio of the financial instrument to increase its leverage ratio, so as to achieve the effect of obtaining a higher profit.

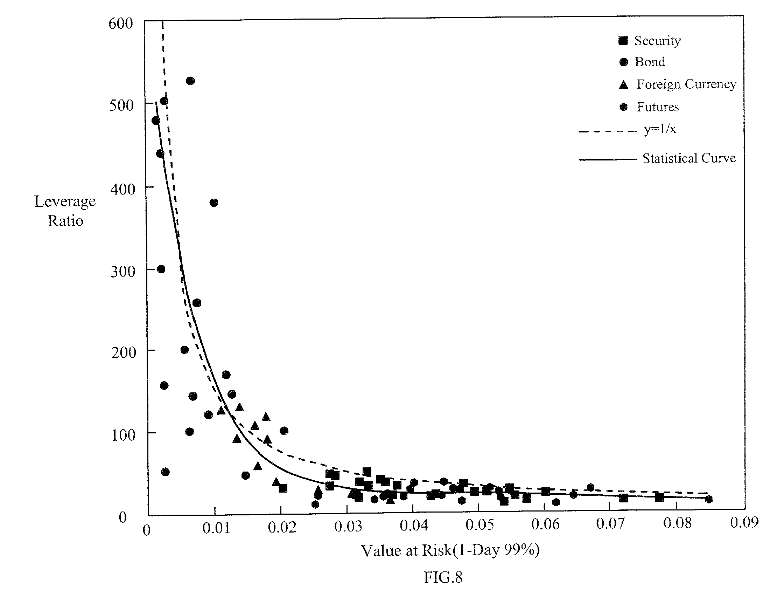

With reference to FIGs. 1 and 8 together, FIG. 8 shows a correspondence relation between a value at risk and a leverage ratio based on the market consensus in accordance with a second preferred embodiment of the present invention. Based on this preferred embodiment, the storage unit 10 further stores a plurality of records of financial instrument reference history data 110 which includes any exchange company, clearing company or other institute in the market that has mapped out data on financial instruments, special commodity products and their deposits. After the risk management unit 20 obtains the plurality of records of financial instrument reference history data 110 from the storage unit 10, a statistical method is used to estimate the correspondence relation between the value at risk and the leverage ratio. In the figures, the x-axis represents the value at risk and the y-axis represents the leverage ratio, and the correspondence relation is represented by a curve. The statistical method can be a nonparametric regression method for obtaining the estimation, and the curve passes, on average, through all points. In other words, the relation between the value at risk and the leverage ratio represented by the curve is sufficient to show that the financial instrument reference history data 110 corresponds to a leverage ratio allowed by any one of the values at risk. In the description above, the financial instrument reference history data 110 in this embodiment can be a financial instrument designed by any exchange company or clearing company, and thus the curve with the risk management function can be used for representing the leverage ratio of the market consensus. With this correspondence relation, if a selected financial instrument is situated above the curve, it means that the leverage ratio of the value at risk exceeds the leverage ratio of the market consensus, and the risk exposure of such financial instrument is too high. Now, the leverage ratio adjusting module 230 can be used for adjusting and lowering the leverage ratio of the financial instrument to reduce its risk exposure, so as to achieve the risk management effect. On the other hand, if a selected financial instrument is situated below the curve, it means that the leverage ratio of the value at risk is smaller than the leverage ratio of the market consensus. Now, the leverage ratio adjusting module 230 can be used for adjusting and increasing the leverage ratio of the financial instrument to increase its leverage ratio, so as to achieve a flexible operation effect. Of course, the value at risk (VaR) method is used for illustrating the present invention only, but not intended for limiting the scope of the invention. In fact, other risk measurement methods can be used to achieve the same or equivalent effect.

With reference to Table 3 for the adjustment of the leverage ratio for the risk management system in accordance with the present invention, the leverage ratio of each financial instrument is an adjustment to the aforementioned curve. Compared with the asset pool 1-Day 99% VaR in Tables 2 and 3, the adjusted leverage ratio of the commodity as shown in Table 2 is determined by the leverage ratio of the commodity directly, and the adjusted leverage ratio of the commodity as shown in Table 3 is determined by the foregoing curve, and thus the asset pool 1-Day 99% VaR as shown in Table 3 is smaller than that shown in Table 2. As to the American 10-year bond, the value at risk and the leverage ratio of this commodity cannot be matched. The risk management system of the present invention provides a decisive effect. If the M&P method is used for managing the over-loss risk, then the American 10-year bond and other similar stock commodities may result in an overall value at risk VaRF>100% of the fund. If the risk management system of the invention is adopted to adjust the Aggregate Leverage Ratio (ALR) to total NAV, then the value at risk can be lowered significantly.

**Table 3. Examples of Adjusting Leverage Ratios by a Risk Management System of the Present Invention**

| Financial Instrument | Value Per Lot | Contract Value | Fund TNAV (NTD) | Deposit | Quantity of Lots | Leverage Ratio | Subject 1-Day 99% VaR | Asset Pool 1-Day 99% VaR | M&P Percentage % |
|---|---|---|---|---|---|---|---|---|---|
| Taiwan Index Futures | $200 | $1,909,000 | $1,000,000,000 | $90,000 | 523 | 14.93 | 4.74% | 49.56% | 49.28 |
| Financial Futures | $1,000 | $1,177,000 | $1,000,000,000 | $75,000 | 849 | 14.59 | 4.91% | 50.12% | 65.08 |
| Electronics Futures | $4,000 | $1,604,000 | $1,000,000,000 | $90,000 | 623 | 13.34 | 5.44% | 50.81% | 52.39 |
| American 10-year Bond | $32,780 | $3,482,363 | $1,000,000,000 | $30,977 | 287 | 88.35 | 1.16% | 71.76% | 55.01 |
| Gold 100 oz | $3,278 | $2,244,447 | $1,000,000,000 | $88,506 | 445 | 17.19 | 3.53% | 42.45% | 47.44 |

The value at risk calculation module 210 can be used for calculating the overall value at risk of the investment portfolio. The risk calculation method of the overall value at risk is preferably different from the risk calculation method of the value at risk and individual value at risk in the correspondence relation. In a preferred embodiment, the value at risk and the individual value at risk in the correspondence relation can be implemented by the value at risk (VaR) method, and the overall risk measurement can be implemented by the Copula method. The Copula method was submitted in French by Sklar in 1959, but was only applied in the financial area until 1999. When the risk of a combination of assets is assessed, the calculated value at risk of the individual financial instrument can be used, in connection with individual financial instruments such as using a linear correlation, to obtain an overall value at risk of the investment portfolio. The correlation method is a function of mapping a multi-variable onto a linear distribution, and thus the risk management unit 20 can estimate the overall risk measurement of the investment portfolio according to the value at risk of the individual financial instrument in the investment portfolio.

With reference to FIG. 1 for a risk management system in accordance with a first preferred embodiment of the present invention, the interface unit 30 further comprises of a threshold value input module 320 and a warning module 330. Since the investment portfolio is created in compliance with the related laws and regulations, there is a quota limitation for investments, In this preferred embodiment, a mechanism for viewing the quota of an investment is provided. The threshold value input module 320 is used for inputting at least one threshold value and provides for the risk management unit 20 to determine a relation between the threshold value and a default condition and also output a warning message through the warning module 330. For example, the threshold value input module 320 is provided for inputting a first threshold value such as 0.05, and the risk management unit 20 determines whether or not the sum of deposits or premiums of a single contract of the plurality of selected subject financial instruments is smaller than or equal to a first threshold value, and if not, then the warning module 330 will output a warning message. Furthermore, the threshold value input module 320 is provided for inputting a second threshold value such as 0.2, and the risk management unit 20 determines respectively whether or not the sum of deposits or premiums of a single product selected from the plurality of subject financial instruments is smaller than or equal to a first threshold value, and if not, then the warning module 330 will output a warning message. For example, the threshold value input module 320 can input a third threshold value such as 0.7, and the risk management unit 20 determines whether or not the sum of deposits or premiums of the plurality of selected subject financial instruments is smaller than or equal to the third threshold value, and if not, then the warning module 330 will output a warning message.

In summation of the description above, the risk management unit 20 in accordance with a preferred embodiment of the present invention can obtain a threshold for limiting the quota of the investment through the interface unit 30 and achieve the effects of complying with the related laws and regulations and providing a mechanism of checking the quota of the investment. In addition, the value at risk calculation module 210 of the risk management unit 20 can respectively calculate an individual value at risk of each financial instrument or an overall value at risk of the entire investment portfolio. Therefore, a statistical model of risk measurements is formulated by integrating three factors, such as the compliance of related laws and regulations for the investment, the individual value at risk of the financial instrument, and the overall value at risk of the entire investment portfolio.

With reference to FIG. 1 for a risk management system in accordance with a preferred embodiment of the present invention, the risk management unit 20 further comprises of a quantified verification module 240. In this embodiment, the risk management unit 20 can calculate the overall value at risk of the asset pool, and the quantified verification module 240 can simulate the impact of extreme risk factors to the investment portfolio and perform a stress test for the overall value at risk of the investment portfolio.

The close correlation between an asset and a financial organization may drive the risk factors to fall beyond a normal status substantially due to a large-scale liquidity crisis caused by the credit crisis of an individual asset or a fund. Thus, the multivariance normal asset changing model faces a high degree of model risk, and fund managers should correct the model structure by the Copula method and use a nonlinear correlation sensitivity to analyze higher-order fluctuation terms and merge the result into the formula of the risk combination of derivatives, and calculate the probability of the maximum loss tolerance according to the extreme value risk measurement mechanism (ExR) to adjust the leverage ratio of each asset to constitute a bottom-line safety net for the liquidity risk. In a preferred embodiment of the present invention, the quantified verification module 240 comprises of an extreme value risk measurement mechanism (ExR) for calculating both an estimated value for the tail distribution more accurately and the probability of extreme value loss occurred at the tail distribution, and applying the statistical model of the extreme value distribution to estimate the extreme value. When the extreme value is calculated, then a back test is performed to obtain a time sequence data for the asset pool return and use it to select a plurality of extreme value samples from the time sequence data, such as dividing observed values into successive time horizons, and performing an extreme value distribution according to the characteristics of the plurality of extreme value samples after the maximum value of each time horizon is obtained and used as its extreme value, or locating any numeric value exceeding the set threshold value. Finally, the overall value at risk of the asset pool is assessed according to the extreme value distribution to complete the stress test. Since the July 2007 occurrence of the American subprime mortgage storm which triggered a serious global financial issue, every financial organization and every investment bank suffered regardless of their scale, and were either forced to go bankrupt or merged by others in this financial turmoil. Government organizations and central banks all over the world started realizing that it is insufficient to manage the value at risk simply by a risk management mechanism. In general, the probability of an extreme value loss occurred in an investment portfolio is very small, assuming that the value at risk falls under a normal distribution, but the facts show that there is a large error in the probability of an extreme value loss for estimating the value at risk. From the systematic risks of the global economy in this subprime mortgage storm, it is known that the probability of the extreme value loss is not as optimistic as that estimated by the traditional risk statistical model. The quantified verification module 240 uses historic data for tracking and the stress test for verifying the quantification, so as to figure out the probability distribution of the extreme value risk more accurately and to provide a reliable tool for estimating the probability of future occurrence of extreme values.

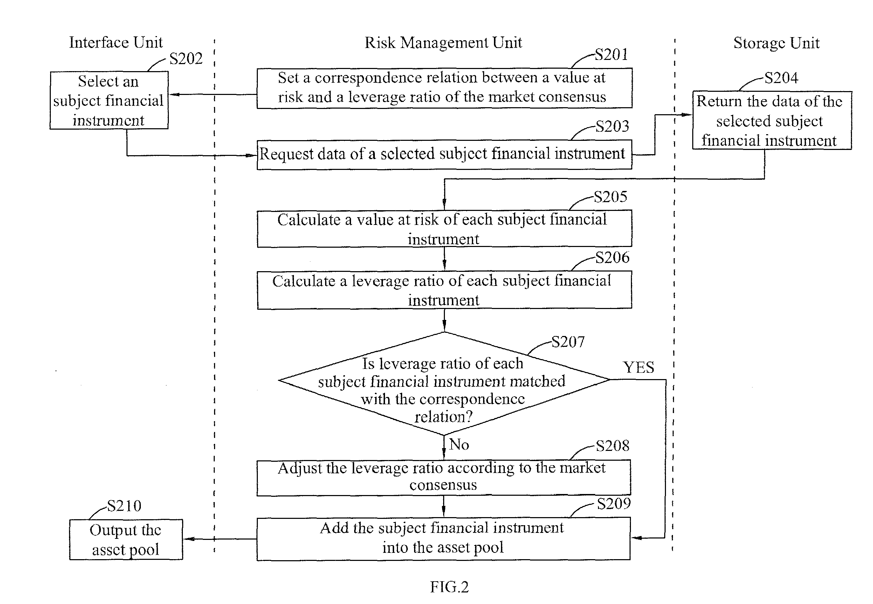

With reference to FIG. 2 for a flow chart of a systematic risk management method in accordance with a first preferred embodiment of the present invention, the risk management unit sets a correspondence relation between a value at risk and a leverage ratio of the market consensus (S201). Then, the interface unit selects a plurality of subject financial instruments (S202). Next, the risk management unit obtains data of the plurality of selected subject financial instruments from a storage unit (S203), and the risk management unit calculates a value at risk of each subject financial instrument (S205) and a leverage ratio (S206), and then selects a value at risk (S207) and adjusts the leverage ratio of each subject financial instrument according to the correspondence relation (S208). Finally, the plurality of subject financial instruments are added into the asset pool (S209), and outputted from the interface unit (S210). The leverage ratio of each selected subject financial instrument is determined whether or not it complies with the correspondence relation, and if not, then the leverage ratio is adjusted. In this preferred embodiment, the correspondence relation between the value at risk and the leverage ratio of the market consensus is set by calculating the value at risk and the leverage ratio, and the method of adjusting the leverage ratio is the same as the preferred embodiment of the risk management system of the invention, and thus will not be described here again.

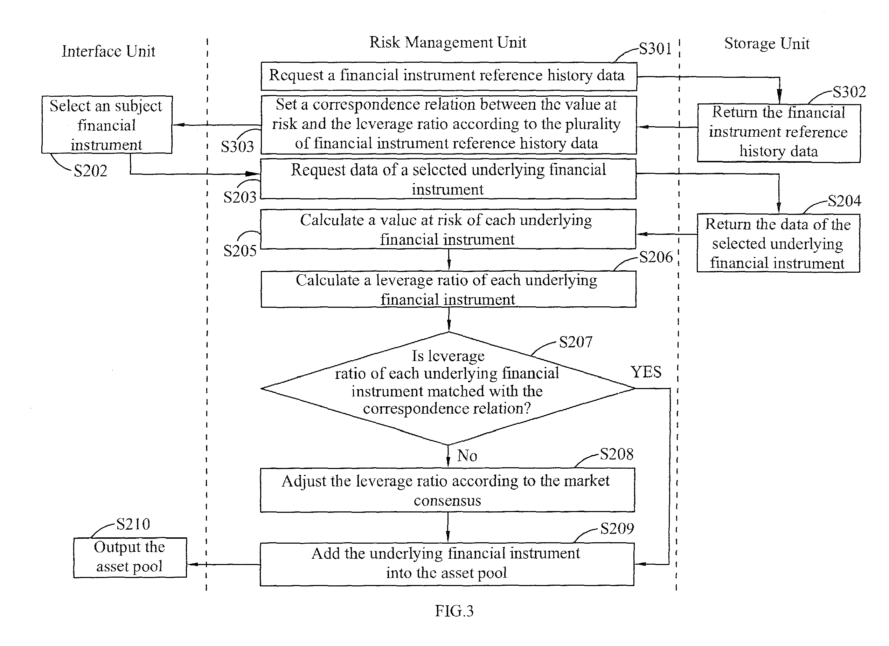

With reference to FIG. 3 for a flow chart of a systematic risk management method in accordance with a second preferred embodiment of the present invention, the difference of the systematic risk management method of this preferred embodiment from the first preferred embodiment resides on that the correspondence relation between the value at risk and the leverage ratio of the market consensus is calculated according to the financial instrument reference history data, and the risk management unit requests a financial instrument reference history data from the storage unit (S301). Then, the storage unit returns the financial instrument reference history data (S302). In other words, the plurality of financial instrument reference history data is obtained from the storage unit. Finally, the correspondence relation between the value at risk and the leverage ratio is estimated by a statistical method according to the plurality of financial instrument reference history data, (S303). In this preferred embodiment, the statistical method is the same as the method used in the risk management system of the foregoing preferred embodiment, and thus will not be described here again.

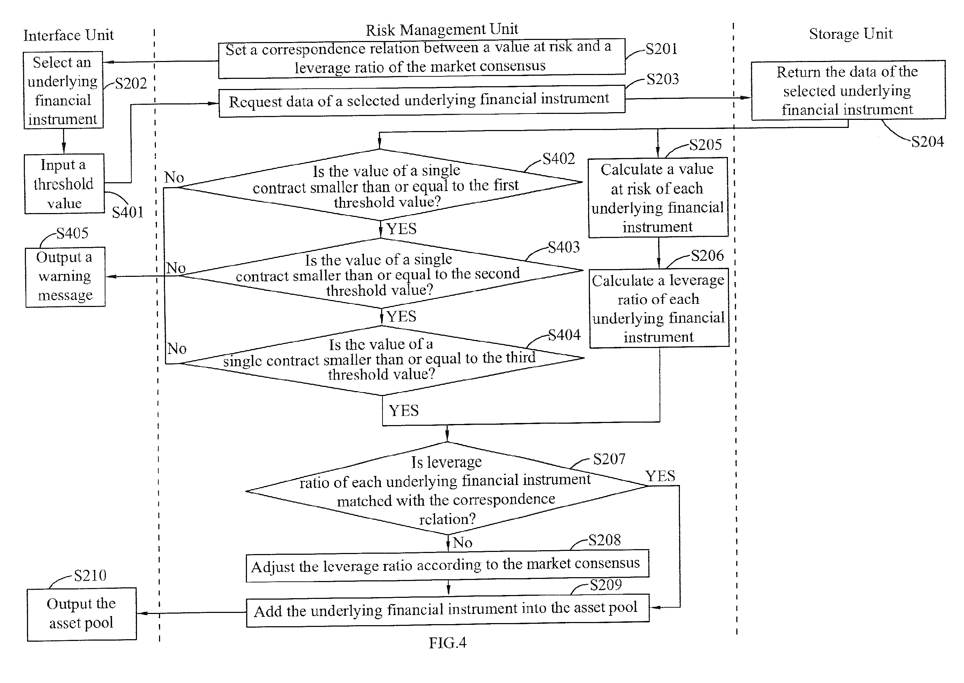

With reference to FIG. 4 for a flow chart of a systematic risk management method in accordance with a third preferred embodiment of the present invention, the difference of the systematic risk management method of this preferred embodiment from the first preferred embodiment resides on that the interface unit inputs a threshold value (S401) provided for the risk management unit to determine the relation of the threshold value with a default condition, and a warning message is outputted through the warning module. Since the investment portfolio is created in compliance with the related laws and regulations, there is a limitation on the quota of an investment. In this preferred embodiment, a mechanism for checking the quota of an investment is provided. For example, the threshold value input module inputs a first threshold value, and the risk management unit determines whether or not the sum of deposits or premiums of a single contract of a plurality of selected subject financial instruments is smaller than or equal to the first threshold value (S402), and if not, then the warning module will output a warning message (S405). For example, the threshold value input module inputs a second threshold value, and the risk management unit determines whether or not the sum of deposits or premiums of a single product of a plurality of selected subject financial instruments is smaller than or equal to the second threshold value (S403), and if not, then the warning module will output a warning message (S405). For example, the threshold value input module inputs a third threshold value, and the risk management unit determines whether or not the sum of deposits or premiums of a plurality of selected subject financial instruments is smaller than or equal to the third threshold value (S404), and if not, then the warning module will output a warning message (S405).

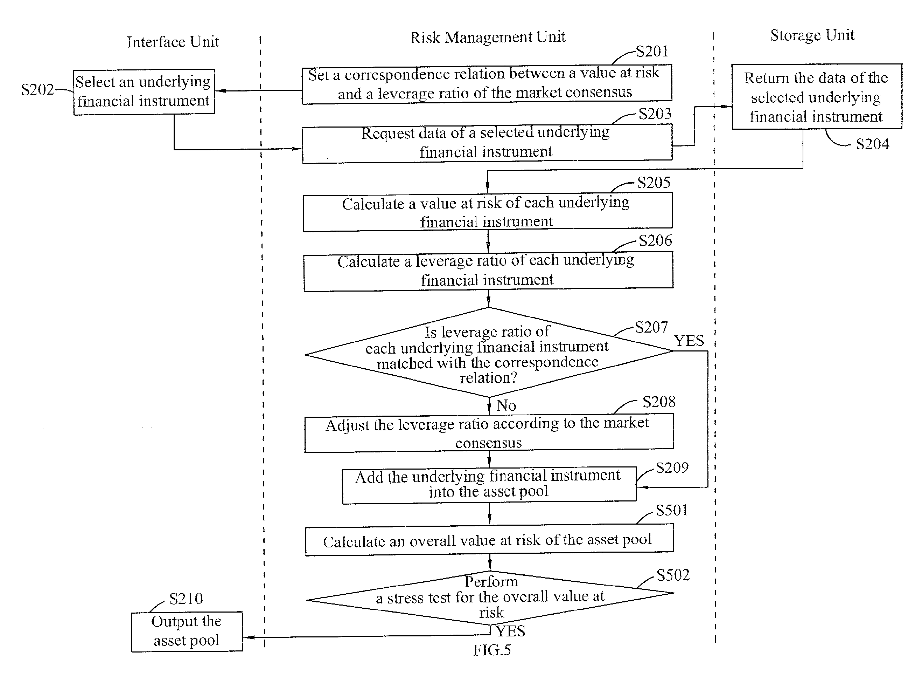

With reference to FIG. 5 for a flow chart of a systematic risk management method in accordance with a fourth preferred embodiment of the present invention, the difference of this preferred embodiment from the foregoing preferred embodiments resides in that the risk management unit 20 of this embodiment can calculate an overall value at risk of the asset pool (S501), and perform a stress test for the overall value at risk (S502). In this preferred embodiment, the risk calculation method of the overall value at risk is the same as that for the risk management system of the present invention, and thus will not be described again here.

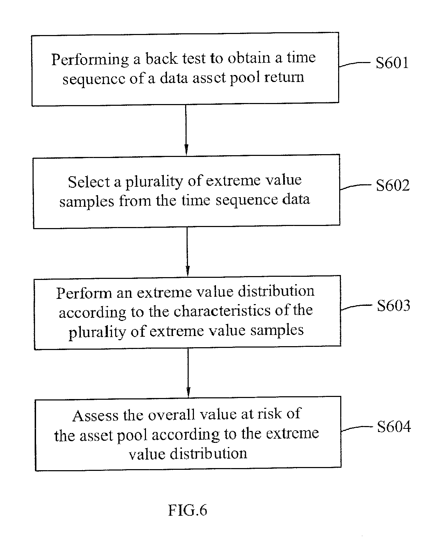

With reference to FIG. 6 for a flow chart of a stress test using a systematic risk management method in accordance with the present invention, the extreme value risk measurement mechanism (ExR) is implemented by a test including but not limited to the stress test. The flow chart of the stress test in accordance with the present invention comprises of the steps of: performing a backtracking test to obtain a time sequence of a data asset pool return (S601); selecting a plurality of extreme value samples from the time sequence data (S602); performing an extreme value distribution according to the characteristics of the plurality of extreme value samples (S603); and assessing the overall value at risk of the asset pool according to the extreme value distribution (S604) to complete the stress test. In the present invention, an extreme value theory can be used for calculating both an estimated value for the tail distribution more accurately and the probability of extreme value loss for the tail distribution, as well as applying the statistical model of the extreme value distribution to estimate an extreme value. When the extreme value is calculated, the observed values are divided into successive time horizons, and the maximum value in each time horizon is defined as the extreme value, or the numeric value exceeding a set threshold value is determined.

In a preferred embodiment of the present invention, the risk management computer program product is implemented by computer software, such that after a computer loads and executes a computer program, the risk management method can be achieved.

In summation of the description above, the systematic risk management method of the present invention and its system and computer program product integrates a management mechanism of the aggregate leverage ratio to total NAV (ALR), and adjusts and manages credit risks by the risk leverage ratio; and adopts the extreme value risk measurement mechanism (ExR) to monitor the risk measuring ability at the tail strictly, and uses the Copula statistical model to improve the risk measurement accuracy of the overall value at risk (VaR) of the investment portfolio, so as to overcome the issue of the prior art that could not estimate the value at risk (VaR) and handle investment related problems, and successfully provides a risk management mechanism for accurately measuring and monitoring systematic risks.

## Claims

1. A systematic risk management method, comprising the steps of:
setting a correspondence relation between value at risk and leverage ratio by a risk management unit;
selecting a plurality of subject financial instruments by an interface unit;
obtaining data of the plurality of selected subject financial instruments from a storage unit through the risk management unit;
calculating an individual value at risk for each of the plurality of subject financial instruments by the risk management unit, and selectively adjusting each leverage ratio for each of the plurality of subject financial instruments according to the correspondence relation; and
adding the plurality of subject financial instruments into an asset pool, and outputting the asset pool through the interface unit.

2. The systematic risk management method of claim 1, wherein the correspondence relation between value at risk and leverage ratio is a trade-off relation, and the correspondence relation satisfies the condition of:
leverage ratio = I/value at risk.

3. The systematic risk management method of claim 1, wherein the step of setting the correspondence relation between value at risk and leverage ratio further comprises the steps of:
obtaining historic data of a plurality of reference financial instruments from the storage unit; and
estimating the correspondence relation between value at risk and leverage ratio by a statistical method which includes a nonparametric regression method according to the historic data of the plurality of reference financial instruments.

4. The systematic risk management method of claim 1, further comprising steps of determining whether or not a sum of deposits or royalties of a single contract of the plurality of subject financial instruments is less than or equal to a first threshold value, and if not, then the interface unit outputs a warning message;
determining whether or not a sum of deposits or royalties of a single product of the subject financial instruments is less than or equal to a second threshold value, and if not, then the interface unit outputs a warning message; and
determining whether or not a sum of deposits or royalties of the plurality of subject financial instruments is less than or equal to a third threshold value, and if not, then the interface unit outputs a warning message.

5. The systematic risk management method of claim 1, further comprising the steps of:
calculating an overall value at risk of the asset pool by the risk management unit; and
performing a stress test for the overall value at risk according to an extreme value theory by the risk management unit;
wherein the overall value at risk is calculated differently from the value at risk in the correspondence relation and the individual value at risk, and the overall value at risk is calculated by a Copula method.

6. The systematic risk management method of claim 5, wherein the stress test comprising the steps of:
performing a backtracking test to obtain time sequence data for a return on the asset pool;
selecting a plurality of extreme value samples from the time sequence data;
performing an extreme value distribution according to the properties of the plurality of extreme value samples; and
evaluating the overall value at risk of the asset pool according to the extreme value distribution.

7. A systematic risk management system, comprising:
a storage unit, for storing a plurality of subject financial instrument data;
an interface unit, comprising:
a financial instrument selection module, for selecting a plurality of subject financial instruments; and
an asset pool output module, for outputting an asset pool; and
a risk management unit, coupling to the storage unit and the interface unit, for setting a correspondence relation between value at risk and leverage ratio, calculating an individual value at risk for each of the plurality of subject financial instruments, adjusting a leverage ratio of each of the plurality of selected subject financial instruments according to the correspondence relation, adding each of the plurality of selected subject financial instruments in the asset pool, and outputting the asset pool from the asset pool output module.

8. The systematic risk management system of claim 7, wherein the risk management unit further comprises:
a value at risk calculation module, for obtaining data of the plurality of selected subject financial instruments from the storage unit, calculating the individual value at risk for each of the plurality of selected subject financial instruments;
a leverage ratio calculation module, for obtaining data of the plurality of selected subject financial instruments from the storage unit, calculating the leverage ratio for each of the plurality of selected subject financial instruments; and
a leverage ratio adjusting module, for selectively adjusting the leverage ratio for each of the plurality of selected subject financial instruments according to the correspondence relation.

9. The systematic risk management system of claim 7, wherein the correspondence relation between value at risk and leverage ratio is a trade-off relation, and the correspondence relation satisfies the condition of:
leverage ratio =1/value at risk.

10. The systematic risk management system of claim 7, wherein the risk management unit accesses historic data of a plurality of reference financial instruments from the storage unit, and then estimates the correspondence relation according to the historic data of the plurality of the reference financial instruments by a statistical method which comprises a nonparametric regression method.

11. The systematic risk management system of claim 7, wherein the interface unit further comprises:
a threshold value input module, for inputting a first threshold value; and
a warning module, for outputting a warning message;
wherein the risk management unit determines whether or not a total sum of deposits or premiums of a single contract of the plurality of selected subject financial instruments is smaller than or equal to the first threshold value, and if not, then the warning module outputs the warning message.

12. The systematic risk management system of claim 7, wherein the interface unit further comprises:
a threshold value input module, for inputting a second threshold value; and
a warning module, for inputting a warning message;
wherein the risk management unit determines whether or not whether or not a total sum of deposits or premiums of a single product of the selected subject financial instruments is smaller than or equal to the second threshold value, and if not, then the warning module outputs the warning message.

13. The systematic risk management system of claim 7, wherein the interface unit further comprises:
a threshold value input module, for inputting a third threshold value; and
a warning module, for outputting a warning message;
wherein the risk management unit determines whether or not whether or not a total sum of deposits or premiums of the plurality of selected subject financial instruments is smaller than or equal to the third threshold value, and if not, then the warning module outputs the warning message.

14. The systematic risk management system of claim 7, wherein the risk management unit calculates an overall value at risk of the asset pool by a Copula method, and the risk management unit further comprises a quantified verification module for performing a stress test for the overall value at risk according to an extreme value theory, and the overall value at risk is calculated differently from the value at risk in the correspondence relation and the individual value at risk, and the quantified verification module performs a backtracking test to obtain time sequence data of a return of the asset pool, selects a plurality of extreme value samples from the time sequence data, distributes extreme values according to the characteristics of the plurality of extreme value samples, and evaluates the overall value at risk of the asset pool according to the distribution of the extreme values.

15. A systematic risk management computer program product, for performing the method as recited in any one of claims 1 to 6 after a computer loads and executes the computer program.
